# EUROPEAN PATENT APPLICATION

(11) **EP 4 625 800 A1**
(43) Date of publication of application: **01.10.2025**
(21) Application number: 25164978.6
(22) Date of filing: 20.03.2025
(51) Int. Cl.: H02M 3/335, H02M 1/34

(54) **DC-DC CONVERTER**

(30) Priority: 27.03.2024 KR 20240041856; 18.12.2024 KR 20240189675
(71) Applicant: Hyundai Mobis Co., Ltd., Gangnam-gu Seoul 06141 (KR)
(72) Inventor: KIM, Won Gon, Yongin-si 16891 (KR); BANG, Tae Ho, Yongin-si 16891 (KR); SHIM, Hyun Woo, Yongin-si 16891 (KR); LEE, Seongchan, Yongin-si 16891 (KR); HEO, Yun, Yongin-si 16891 (KR)
(74) Representative: Vossius & Partner Patentanwälte Rechtsanwälte mbB

(57) **Abstract**

Provided is a direct current to direct current (DC-DC) converter, and more particularly, a DC-DC converter that provides a wide input voltage range and an increased boost voltage in power transfer between a high-voltage system and a low-voltage system, and may control forward and reverse operations by using a mode switching circuit.

## Description

### CROSS-REFERENCE TO RELATED APPLICATIONS

This application claims priority to Korean Patent Application No. 10-2024-0041856, filed on March 27, 2024 and No. 10-2024-0189675, filed on December 18, 2024, in the Korean Intellectual Property Office.

### TECHNICAL FIELD

The following disclosure relates to a direct current to direct current (DC-DC) converter, and more particularly, to a DC-DC converter that has a wide input voltage range in a forward operation for transferring power from a high-voltage system to a low-voltage system, and increases the maximum voltage that is capable of being boosted in a reverse operation for transferring power from the low-voltage system to the high-voltage system, thereby controlling the forward and reverse operations by using a mode switching circuit.

### BACKGROUND

Recently, an eco-friendly vehicle such as an electric vehicle may be equipped with a direct current to direct current (DC-DC) converter for converting power in both directions between a high-voltage system such as a battery and a low-voltage system such as a vehicle load. That is, the DC-DC converter may convert and transfer power between the high-voltage system and the low-voltage system. A forward mode refers to a case where power is converted and transferred from the high-voltage system to the low-voltage system, and a reverse mode refers to a case where power is converted and transferred from the low-voltage system to the high-voltage system.

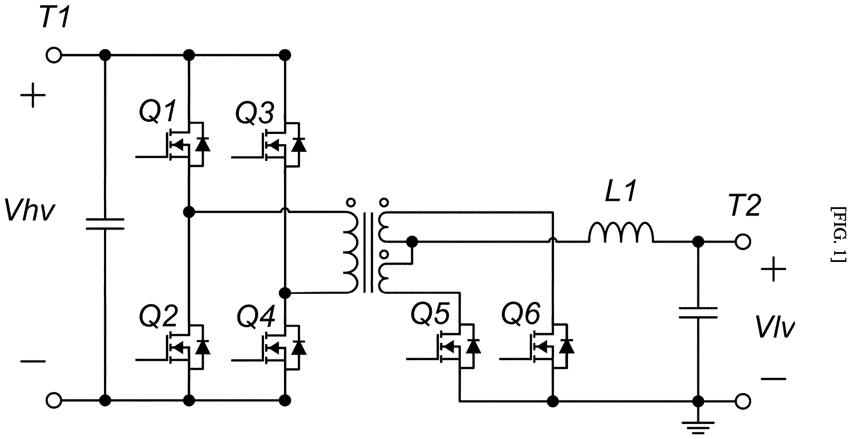

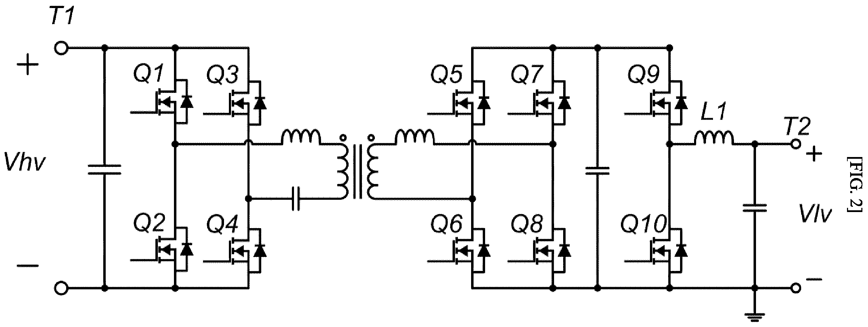

FIG. 1 shows an embodiment of a conventional DC-DC converter, and FIG. 2 shows another embodiment of the conventional DC-DC converter.

The DC-DC converter shown in FIG. 1 may be operated as a current-type converter in which an inductor is applied to a secondary circuit of a transformer when operated in a reverse mode, and may thus achieve power conversion performance that has an improved maximum voltage that is capable of being boosted compared to a voltage-type converter. However, when operated in a forward mode, a circuit equipped on a primary side of the transformer may be a full-bridge circuit, which results in a narrow input voltage range that may achieve a rated output.

Next, the DC-DC converter shown in FIG. 2 may be operated as a resonant converter when operated in the forward or reverse mode, and thus achieve excellent power conversion efficiency. However, similar to the DC-DC converter shown in FIG. 1, when operated in a forward direction, the circuit equipped on the primary side of the transformer may be the full-bridge circuit, which results in the narrow input voltage range that may achieve the rated output.

To compensate for this problem and increase the rated output in the forward mode operation, the DC-DC converter shown in FIG. 2 may include a buck-boost converter on a low-voltage system side, which results in an increase in the size and volume of the converter due to the addition of the buck-boost converter. In addition, a circuit feature requires a capacitor capable of handling a large current, which increases a converter manufacturing cost. In addition, a separate component may be additionally required to control the buck-boost converter, which increases the complexity of a control method of the converter.

Therefore, there is a need for a DC-DC converter that may reduce a converter weight and simplify its control method while stably providing the rated output over the wide input voltage range in the forward mode operation and may boost a voltage to a higher voltage than before in the reverse mode operation.

### [Related Art Document]

### [Patent Document]

Korean Patent Laid-Open Publication No. 10-2017-0104434 (September 15, 2017)

### SUMMARY

An embodiment of the present disclosure is directed to providing a direct current to direct current (DC-DC) converter that may be operated over a wide input voltage range in a forward mode operation and have improved power conversion performance by increasing the maximum voltage that is capable of being boosted in a reverse mode operation.

In one general aspect, a direct current to direct current (DC-DC) converter includes: a transformer disposed between a first terminal and a second terminal; a primary circuit disposed between the first terminal and the transformer; and a secondary circuit including a rectifier circuit and disposed between the transformer and the second terminal, wherein the primary circuit includes a totem pole circuit disposed between a first end of a primary winding of the transformer and the first terminal, a primary clamp circuit disposed between a second end of the primary winding of the transformer and a negative terminal of the first terminal, and a mode switching circuit including at least one switch, disposed between a second end of the primary winding of the transformer and a positive terminal of the first terminal, and performing switching between a forward mode and a reverse mode.

The totem pole circuit may include first and second switches connected to the positive terminal and the negative terminal of the first terminal, respectively, a common node between the first switch and the second switch may be connected to the a first end of the primary winding of the transformer, and the primary clamp circuit may include a third switch and a first clamp capacitor connected in series with each other between a second end of the primary winding of the transformer and the negative terminal of the first terminal, and a fourth switch connected in parallel with the third switch and the first clamp capacitor.

The mode switching circuit may include a fifth switch and a diode connected in series with each other between a second end of the primary winding of the transformer and the positive terminal of the first terminal, and the diode may be disposed to allow a direction from a second end of the primary winding of the transformer to the positive terminal of the first terminal to be a forward direction of the diode.

The converter may further include a controller for controlling at least one switch included in the primary circuit or the secondary circuit, wherein the controller controls the fifth switch to allow the fifth switch to be turned off in the forward mode for transferring power from the first terminal to the second terminal, and the fifth switch to be turned on in the reverse mode for transferring power from the second terminal to the first terminal.

In the forward mode, the controller may control the first to fourth switches to allow the first and fourth switches to be turned on or off simultaneously, the second and third switches to be turned on or off simultaneously, and the first and fourth switches and the second and third switches to be turned on complementarily.

In the reverse mode, the controller may control the first to fourth switches to allow the first and fourth switches to be turned on or off simultaneously, the third switch to be turned off, and the second switch to be turned on complementarily with the first and fourth switches.

The rectifier circuit may include a seventh switch connected between a first end of a secondary winding of the transformer and a negative terminal of the second terminal, and an eighth switch connected between a second end of the secondary winding of the transformer and the negative terminal of the second terminal, and a tab terminal disposed in the secondary winding of the transformer is connected to a positive terminal of the second terminal.

The secondary circuit may include a secondary clamp circuit including a second clamp capacitor and a sixth switch connected in series with each other, and the secondary clamp circuit may be disposed between the tab terminal of the transformer and the negative terminal of the second terminal.

The rectifier circuit may include seventh, eighth, ninth and tenth switches connected to each other in a full bridge, an input terminal of the rectifier circuit may be connected to a secondary winding of the transformer, and an output terminal of the rectifier circuit may be connected to the second terminal.

The secondary circuit may include a secondary clamp circuit including a second clamp capacitor and a sixth switch connected in series with each other, and the secondary clamp circuit may be disposed between the output terminal of the rectifier circuit and the second terminal.

Other features and aspects will be apparent from the following detailed description, the drawings, and the claims.

### BRIEF DESCRIPTION OF THE DRAWINGS

FIG. 1 shows an embodiment of a conventional direct current to direct current (DC-DC) converter.
FIG. 2 shows another embodiment of the conventional DC-DC converter.
FIG. 3 is a circuit diagram of a DC-DC converter according to the present disclosure.
FIG. 4 is a circuit diagram of the DC-DC converter according to a first embodiment of the present disclosure.
FIG. 5 is a circuit diagram of the DC-DC converter according to a second embodiment of the present disclosure.
FIGS. 6A and 6B show a current flow in a forward mode operation of the DC-DC converter according to the first embodiment of the present disclosure.
FIGS. 7A and 7B show the current flow in a reverse mode operation of the DC-DC converter according to the first embodiment of the present disclosure.
FIG. 8 is a timing diagram of a secondary circuit according to the first embodiment of the present disclosure.
FIG. 9 is a timing diagram of a secondary circuit according to the second embodiment of the present disclosure.
FIG. 10 is a graph of the sum of a dead time of a sixth switch and a turn-on time of the sixth switch based on on-duty of a switch included in a rectifier circuit according to the present disclosure.
FIGS. 11A to 11F show voltage and current graphs of the DC-DC converter according to the first embodiment of the present disclosure when the DC-DC converter is operated in the forward mode and an input voltage is 160 V.
FIGS. 12A to 12F show voltage and current graphs of the DC-DC converter according to the first embodiment of the present disclosure when the DC-DC converter is operated in the forward mode and the input voltage is 430 V.
FIGS. 13A to 13F show voltage and current graphs of the DC-DC converter according to the first embodiment of the present disclosure when the DC-DC converter is operated in the reverse mode.

### DETAILED DESCRIPTION OF EMBODIMENTS

The above-mentioned purposes, features, and advantages will become more apparent from the following embodiments provided in relation to the accompanying drawings. The following descriptions of specific structures and functions are provided only as examples to describe the embodiments based on a concept of the present disclosure. Therefore, the embodiments of the present disclosure may be implemented in various forms, and the present disclosure should not be construed as being limited to the embodiments described in this specification or application. The embodiments of the present disclosure may be variously modified and have several forms, and specific embodiments are thus shown in the accompanying drawings and described in detail in this specification or application. However, it should be understood that the present disclosure is not limited to the specific embodiments, and includes all modifications, equivalents, and substitutions included in the spirit and scope of the present disclosure. Terms such as "first" or "second" may be used to describe various components, and the components are not to be construed as being limited to the terms. The terms are used only to distinguish one component and another component from each other. For example, a "first" component may be named a "second" component and the "second" component may also be named the "first" component, without departing from the scope of the present disclosure. It should be understood that when one component is referred to as being connected to or coupled to another component, one component may be connected or coupled directly to another component or be connected or coupled to another component with yet another component interposed therebetween. On the other hand, it should be understood that when one component is referred to as being connected directly to or coupled directly to another component, one component may be connected or coupled to another component without yet another component interposed therebetween. Other expressions to describe a relationship between the components, i.e., "~between" and "directly between" or "adjacent to" and "directly adjacent to", should be interpreted in the same manner as above. Terms used in this specification are used only to describe the specific embodiments rather than limit the present disclosure. A term of a singular number may include its plural number unless explicitly indicated otherwise in the context. It should be understood that terms "include", "have", or the like, used in this specification specify the presence of features, numerals, steps, operations, components, parts, or a combination thereof stated in this specification, but do not preclude the presence or addition of one or more other features, numerals, steps, operations, components, parts, or a combination thereof. Unless otherwise defined, all terms used herein, including technical or scientific terms, have the same meanings as those generally understood by those skilled in the art to which the present disclosure pertains. Terms generally used and defined in a dictionary should be interpreted as the same meanings with meanings within the context of the related art, and should not be interpreted as ideal or excessively formal meanings unless clearly indicated in this specification. Hereinafter, the present disclosure will be described in detail by describing an embodiment of the present disclosure with reference to the accompanying drawings. The same reference numerals in each drawing indicate the same member.

### [DC-DC converter]

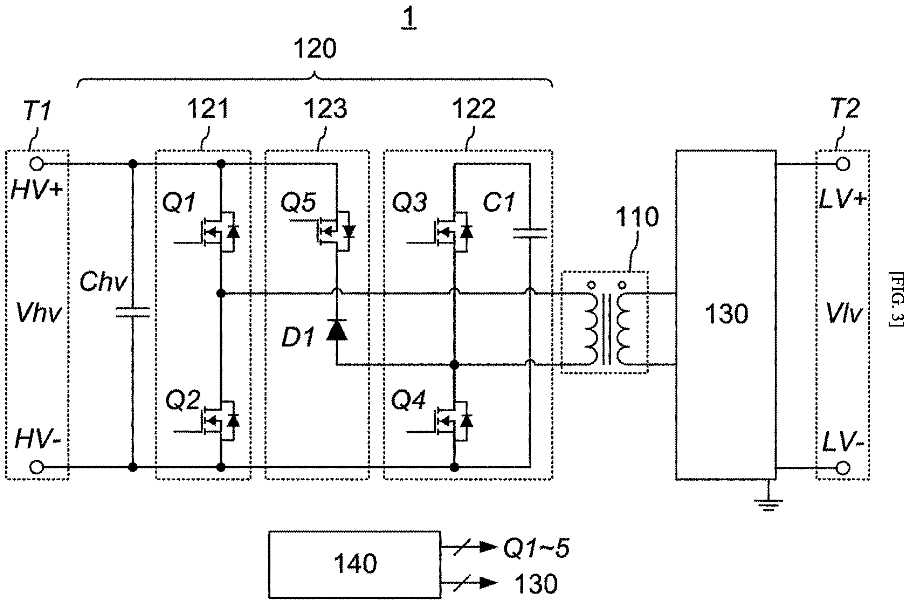

FIG. 3 is a circuit diagram of a direct current to direct current (DC-DC) converter 1 according to the present disclosure.

The DC-DC converter 1 according to the present disclosure may include a first terminal T1, a second terminal T2, a transformer 110, a primary circuit 120, a secondary circuit 130, and a controller 140.

The first terminal T1 and the second terminal T2 may include positive and negative terminals, respectively. In detail, the positive terminal and the negative terminal of the first terminal T1 may be connected to a first power source, and those of the second terminal T2 may be connected to a second power source having a voltage Vlv lower than a voltage Vhv of the first power source. The first or second power source may be a power conversion device that outputs predetermined voltages and currents, and as an example, may be any one of a voltage source, a converter, or an inverter that outputs a fixed voltage.

The transformer 110 may be disposed between the first terminal T1 and the second terminal T2. In detail, the transformer 110 may include a primary winding and a secondary winding wound on a core, and transfer power while having a predetermined transformation ratio between the respective windings according to an electromagnetic induction principle. As an example, the transformer 110 according to the present disclosure may be an insulation transformer in which the primary winding and the secondary winding are insulated from each other, and may have dot terminals at one end of the primary winding and the other end of the secondary winding, respectively.

Next, the description describes the primary circuit 120.

The primary circuit 120 may be disposed between the first terminal T1 and the transformer 110. In detail, the primary circuit 120 may have one side connected to the first terminal T1 and the other side connected to the primary winding of the transformer 110. The primary circuit 120 may include a totem pole circuit 121, a primary clamp circuit 122, a mode switching circuit 123, and a high-voltage capacitor Chv.

The totem pole circuit 121 may be disposed between one end of the primary winding of the transformer 110 and the first terminal T1. In detail, the totem pole circuit 121 may include first and second switches Q1 and Q2 connected to the positive terminal and the negative terminal of the first terminal T1, respectively. The first switch Q1 may have one end connected to the positive terminal of the first terminal T1. The second switch Q2 may have other end connected to the negative terminal of the first terminal T1. The other end of the first switch Q1 and one end of the second switch Q2 may be connected to each other to form a common node. Here, the common node between the first switch and the second switch Q1 and Q2 may be connected to one end of the primary winding of the transformer 110.

The primary clamp circuit 122 may be disposed between the other end of the primary winding of the transformer 110 and the negative terminal of the first terminal T1. In detail, the primary clamp circuit 122 may include third and fourth switches Q3 and Q4 and a first clamp capacitor C1. The third switch Q3 and the first clamp capacitor C1 may be connected in series with each other between the other end of the primary winding of the transformer 110 and the negative terminal of the first terminal T1. In addition, the fourth switch Q4 may be connected in parallel with the third switch Q3 and the first clamp capacitor C1.

The mode switching circuit 123 may include at least one switch, disposed between the other end of the primary winding of the transformer 110 and the positive terminal of the first terminal T1, and may perform switching between a forward mode and a reverse mode.

In detail, the mode switching circuit 123 may include a fifth switch Q5 and a diode D1 connected in series with each other between the other end of the primary winding of the transformer 110 and the positive terminal of the first terminal T1. Here, the diode D1 may be disposed to allow a direction from the other end of the primary winding of the transformer 110 to the positive terminal of the first terminal T1 to be a forward direction of the diode D1. In detail, the fifth switch Q5 may have one end connected to a cathode of the diode D1 and the other end connected to the positive terminal of the first terminal T1. In addition, an anode of the diode D1 may be connected to the other end of the primary winding of the transformer 110. In this way, the mode switching circuit 123 may be controlled by the controller 140, and may determine a mode for a power conversion direction based on whether the fifth switch Q5 is turned on or off.

Next, the description describes the secondary circuit 130.

The secondary circuit 130 may include the rectifier circuit 131 and a secondary clamp circuit 132. The DC-DC converter 1 according to the present disclosure may have first and second embodiments of the secondary circuit 130.

### [First embodiment]

The description describes the DC-DC converter 1 according to the first embodiment of the present disclosure.

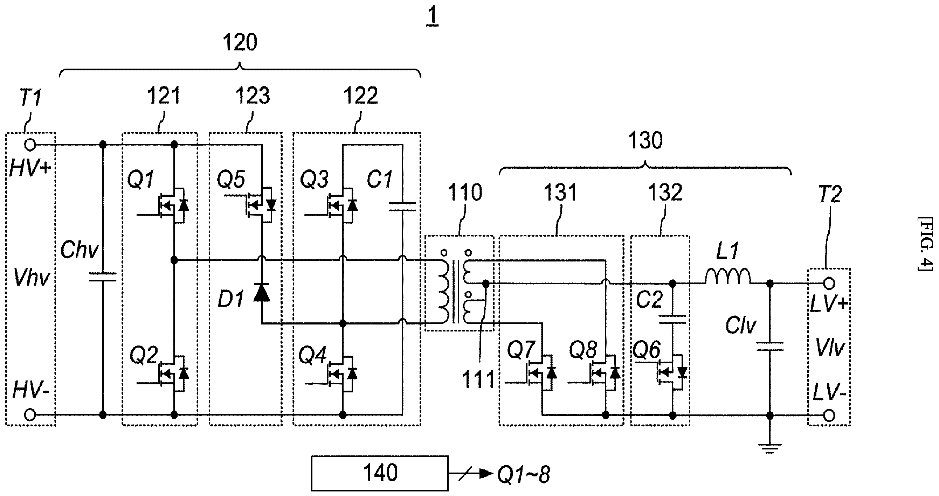

FIG. 4 is a circuit diagram of the DC-DC converter 1 according to the first embodiment of the present disclosure.

The rectifier circuit 131 may be disposed between the transformer 110 and the second terminal T2. In detail, the rectifier circuit 131 may be disposed between the secondary winding of the transformer 110 and the second terminal T2, and may perform a function of rectifying a voltage in both directions.

Here, the rectifier circuit according to the first embodiment may include seventh and eighth switches Q7 and Q8. In detail, the seventh switch Q7 may be connected between one end of the secondary winding of the transformer 110 and the negative terminal of the second terminal T2. In addition, the eighth switch Q8 may be connected between the other end of the secondary winding of the transformer 110 and the negative terminal of the second terminal T2. In addition, a tab terminal 111 disposed in the secondary winding of the transformer 110 may be connected to the positive terminal of the second terminal T2.

If the rectifier circuit 131 is configured as in the first embodiment, the number of switches may be reduced by two compared to the second embodiment, thereby reducing the size and volume of the rectifier circuit 131, reducing a manufacturing cost of the rectifier circuit 131, and simplify control of the rectifier circuit 131.

The secondary clamp circuit 132 according to the first embodiment may include a second clamp capacitor C2 and the sixth switch Q6 connected in series with each other. In the first embodiment, the secondary clamp circuit 132 may be disposed between the tab terminal 111 of the transformer 110 and the negative terminal of the second terminal T2.

In detail, the second clamp capacitor C2 may have one end connected to the tab terminal of the transformer 110, and the other end may be connected to one end of the sixth switch Q6. In addition, the other end of the sixth switch Q6 may be connected to the negative terminal of the second terminal T2.

In this way, a clamp circuit may also be disposed on a secondary side to thus enable a clamping operation even when converting power from the second terminal T2 to the first terminal T1, thereby achieving more stable power conversion.

### [Second embodiment]

Next, the description describes the DC-DC converter 1 according to the second embodiment of the present disclosure.

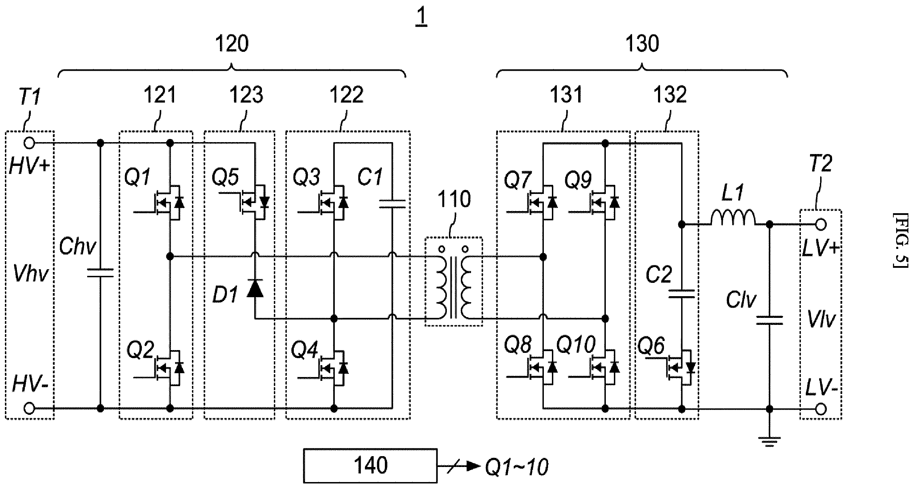

FIG. 5 is a circuit diagram of the DC-DC converter 1 according to the second embodiment of the present disclosure.

The rectifier circuit 131 may be disposed between the transformer 110 and the second terminal T2. In detail, the rectifier circuit 131 may be disposed between the secondary winding of the transformer 110 and the second terminal T2, and may perform the function of rectifying the voltage in both the directions.

The rectifier circuit 131 according to the second embodiment may include the seventh, eighth, ninth and tenth switches Q7 to Q10 connected to each other in a full bridge, an input terminal of the rectifier circuit 131 may be connected to the secondary winding of the transformer 110, and an output terminal of the rectifier circuit 131 may be connected to the second terminal T2. In detail, the rectifier circuit 131 may include the seventh and eighth switches Q7 and Q8 connected in series with each other and the ninth and tenth switches Q9 and Q10 connected in series with each other. In addition, a common node between the seventh and eighth switches Q7 and Q8 may be connected to one end of the secondary winding of the transformer 110. In addition, a common node between the ninth and tenth switches Q9 and Q10 may be connected to the other end of the secondary winding of the transformer 110. Here, the seventh and ninth switches Q7 and Q9 may be connected to the positive terminal of the second terminal T2. Here, the eighth and tenth switches Q8 and Q10 may be connected to the negative terminal of the second terminal T2.

The rectifier circuit 131 according to the second embodiment may adopt a switch having a relatively low withstand voltage because a voltage applied to a switch element included in the rectifier circuit 131 is lower than that in the first embodiment. An element having a low withstand voltage may have a low manufacturing cost, which reduces a circuit design cost, and a switch size may be reduced, thus making the rectifier circuit 131 smaller and lighter.

The secondary clamp circuit 132 according to the second embodiment may include the second clamp capacitor C2 and the sixth switch Q6 connected in series with each other. In addition, in the second embodiment, the secondary clamp circuit 132 may be disposed between the output terminal of the rectifier circuit 131 and the second terminal T2. In detail, the other end of the second clamp capacitor C2 and one end of the sixth switch Q6 may be connected with each other. In addition, one end of the second clamp capacitor C2 may be connected to the common node between the seventh and ninth switches Q7 and Q9, and the other end of the sixth switch Q6 may be connected to the negative terminal of the second terminal T2.

In this way, the power conversion may be performed more stably by also disposing the clamp circuit on the secondary side, thereby enabling the clamp to be operated even when converting power from the second terminal T2 to the first terminal T1.

The secondary circuit 130 may further include an inductor L1 and a low-voltage capacitor Clv. In detail, the inductor L1 and the low-voltage capacitor Clv may be disposed between the secondary clamp circuit 132 and the second terminal T2, and the inductor L1 may have one end connected to the secondary clamp circuit 132 and the other end connected to the positive terminal of the second terminal T2. In addition, the low-voltage capacitor Clv may be connected between the positive and negative terminals of the second terminal T2.

In this way, the inductor L1 and the low-voltage capacitor Clv may be operated as an LC filter, and reduce a noise component that may occur during power conversion operation, thereby improving the power conversion performance and quality.

At least one switch included in the primary circuit 120 or the secondary circuit 130 may be a power semiconductor switch. As an example, the power semiconductor switch may include any one of a metal-oxide-semiconductor field-effect transistor (MOSFET), an insulated gate bipolar transistor (IGBT), a gate turn-off thyristor (GTO), a silicon controlled rectifier (SCR), a silicon carbide metal-oxide-semiconductor field-effect transistor (SiC-MOSFET), a gallium nitride high electron mobility transistor (GaN HEMT), a bipolar junction transistor (BJT), a MOS-controlled thyristor (MCT), a triode for alternating current (Triac), and an integrated gate commutated thyristor (IGCT).

The controller 140 may control at least one switch included in the primary circuit 120 or the secondary circuit 130. In detail, the controller 140 may control at least one power semiconductor switch included in the primary circuit 120 or the secondary circuit 130 by using a separately disposed driving unit (not shown).

### [Mode switching method]

Next, the description describes a method for switching the mode of the DC-DC converter 1 according to the present disclosure by using the controller 140.

A switch control mode for transferring power from the first terminal T1 to the second terminal T2 may be referred to as the forward mode, and a switch control mode for transferring power from the second terminal T2 to the first terminal T1 may be referred to as the reverse mode. Here, when the DC-DC converter 1 is operated in the forward mode, a high voltage at the first terminal T1 may be converted into a low voltage at the second terminal T2, and when DC-DC converter 1 operates in the reverse mode, the low voltage of the second terminal T2 may be converted into the high voltage of the first terminal T1.

The controller 140 may operate the DC-DC converter 1 in either the forward mode or the reverse mode by controlling the mode switching circuit 123. In detail, the controller 140 may operate the DC-DC converter 1 in either the forward mode or the reverse mode by controlling the fifth switch Q5 included in the mode switching circuit 123. Next, the description describes a switch control method for each of the forward mode and the reverse mode.

The switch control method described below is based on the first embodiment. However, the switch control method described below may be adopted for a control method of the switch included in the primary circuit 120 according to the second embodiment.

### [Forward mode]

The description describes the switch control method in the forward mode.

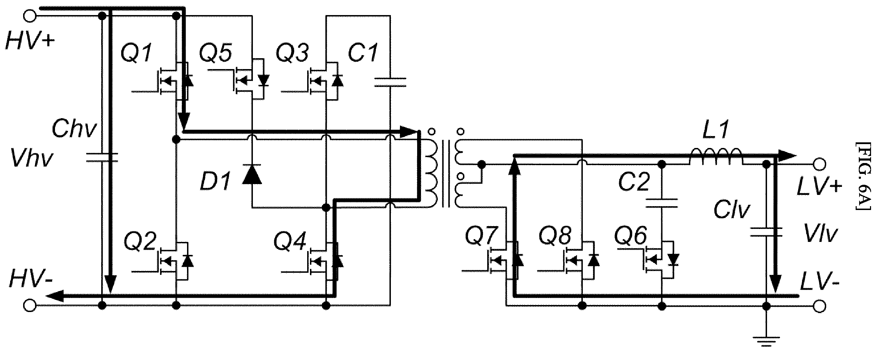

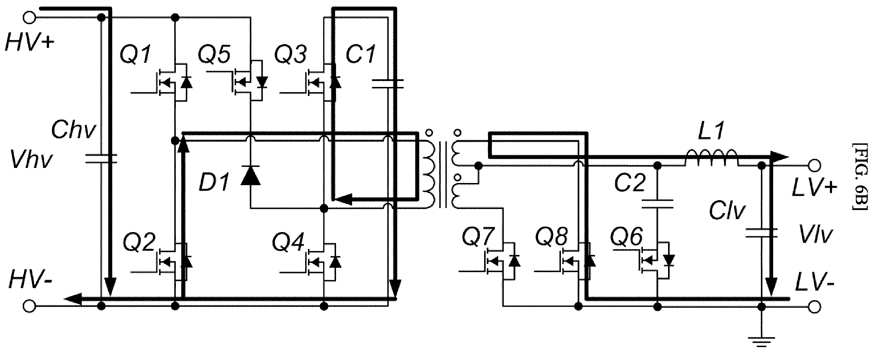

FIGS. 6A and 6B show a current flow in a forward mode operation of the DC-DC converter 1 according to the first embodiment of the present disclosure.

The controller 140 may control the fifth switch Q5 to allow the fifth switch Q5 to be turned off in the forward mode. When the controller 140 turns off the fifth switch Q5 in the forward mode, the totem pole circuit 121 and primary clamp circuit 122 of the primary circuit 120 may be operated, thereby transferring power from the first terminal T1 to the primary winding of the transformer 110.

In the forward mode, the controller 140 may control the first to fourth switches Q1 to Q4 to allow the first and fourth switches Q1 and Q4 to be turned on or off simultaneously, the second and third switches Q2 and Q3 to be turned on or off simultaneously, and the first and fourth switches Q1 and Q4 and the second and third switches Q2 and Q3 to be turned on complementarily.

Referring to FIGS. 6A and 6B, the controller 140 may maintain the fifth switch Q5 to be in an off state in the forward mode, while turning on or off the first and fourth switches Q1 and Q4 simultaneously to be in the same state, and also turning on or off the second and third switches Q2 and Q3 simultaneously to be in the same state. In addition, the first and fourth switches Q1 and Q4 and the second and third switches Q2 and Q3 may be controlled to be turned on complementarily. In this way, the high voltage at the first terminal T1 may be converted into the low voltage at the second terminal T2 and output.

In this process, the controller 140 may control the seventh and eighth switches Q7 and Q8 of the rectifier circuit 131 so that the seventh switch Q7 is turned on or off simultaneously with the first and fourth switches Q1 and Q4, and the eighth switch Q8 is turned on or off simultaneously with the second and third switches Q2 and Q3.

Conventionally, only the fourth switch Q4 may be disposed, and the clamping operation may thus be performed using only one switch. However, the present disclosure shows that the fourth switch Q4 performs the clamping operation, while the third switch Q3 and the first clamp capacitor C1, connected in parallel with the fourth switch Q4, may absorb energy stored in a leakage inductance of the transformer 110 when the fourth switch Q4 is turned off. In this way, a voltage spike may be suppressed to thus reduce a voltage stress on the switch, and enable zero voltage switching (ZVS) or zero current switching (ZCS) operation, which may reduce switching loss, thereby increasing power conversion efficiency of the DC-DC converter 1.

### [Reverse mode]

The description describes the switch control method in the reverse mode.

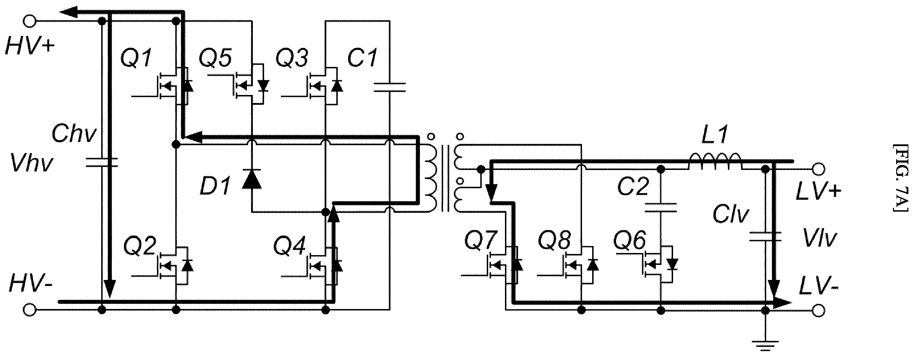

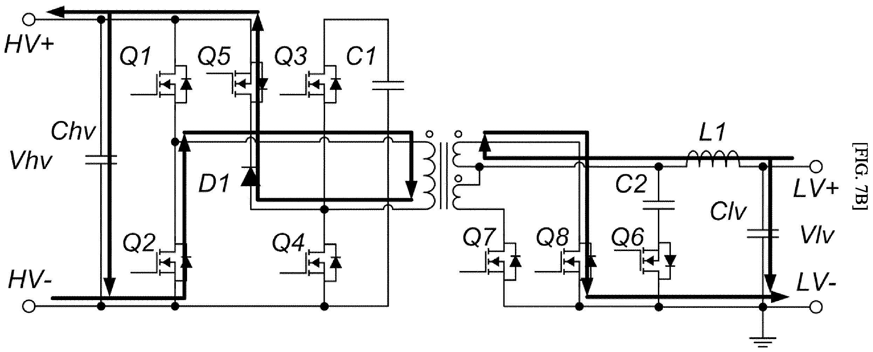

FIGS. 7A and 7B show the current flow in a reverse mode operation of the DC-DC converter 1 according to the first embodiment of the present disclosure.

The controller 140 may control the fifth switch Q5 to allow the fifth switch Q5 to be turned on in the reverse mode. When the controller 140 controls the fifth switch Q5 to be turned on in the reverse mode, the current may flow in one direction from the other end of the primary winding of the transformer 110 to both the terminals of the first terminal T1. In this case, the first, second, fourth, and fifth switches Q1, Q2, Q4, and Q5 may be operated similarly to the full-bridge circuit, that is, in the reverse mode, the DC-DC converter 1 may be operated as a boost converter using the full bridge to boost the low voltage at the second terminal T2 to the high voltage at the first terminal T1.

In the reverse mode, the controller 140 may control the first to fourth switches to allow the first and fourth switches Q1 and Q4 to be turned on or off simultaneously, the third switch Q3 to be turned off, and the second switch Q2 to be turned on complementarily with the first and fourth switches Q1 and Q4.

Referring to FIGS. 7A and 7B, in the reverse mode, the controller 140 may maintain the third switch Q3 to be in an on state and the fifth switch Q5 to be in the off state, while the first and fourth switches Q1 and Q4 are turned on or off simultaneously to be in the same state. In addition, the controller 140 may control the first to fourth switches Q1 to Q4 so that the second switch Q2 and the first and fourth switches Q1 and Q4 are turned on complementarily, and the first, second, fourth and fifth switches Q1, Q2, Q4, and Q5 may thus be controlled. In this way, the high voltage at the first terminal T1 may be power-converted into the low voltage at the second terminal T2 and output.

In this process, the controller 140 may control the seventh and eighth switches Q7 and Q8 of the rectifier circuit 131 so that the seventh switch Q7 is turned on or off simultaneously with the first and fourth switches Q1 and Q4, and the eighth switch Q8 is turned on or off simultaneously with the second switch Q2.

In this way, the third switch Q3 and first clamp capacitor C1 of the primary circuit 120 do not perform clamp operation because no current flows, the first, second, fourth, and fifth switches Q1, Q2, Q4, and Q5 may be operated as the full-bridge circuit, and the DC-DC converter 1 may thus be operated as a full-bridge boost circuit. Therefore, in the process of boosting the low voltage at the second terminal T2 to the high voltage at the first terminal T1, an output voltage range may be wider compared to a conventional one, and the DC-DC converter 1 may thus achieve improved performance.

### [Control method of secondary clamp circuit 132]

Next, the description describes the method of the controller 140 for controlling the secondary clamp circuit 132.

In the reverse mode, which is a mode for converting power from the low voltage at the second terminal T2 to the high voltage at the first terminal T1, a surge voltage may occur at both ends of the switch included in the rectifier circuit 131. Therefore, the present disclosure may reduce the surge voltage that may occur at both the ends of the switch included in the rectifier circuit 131 by controlling the secondary clamp circuit 132 disposed in the secondary circuit 130. The rectifier circuit 131 may have first and second embodiments, and the description describes the control method of the secondary clamp circuit 132 in each embodiment.

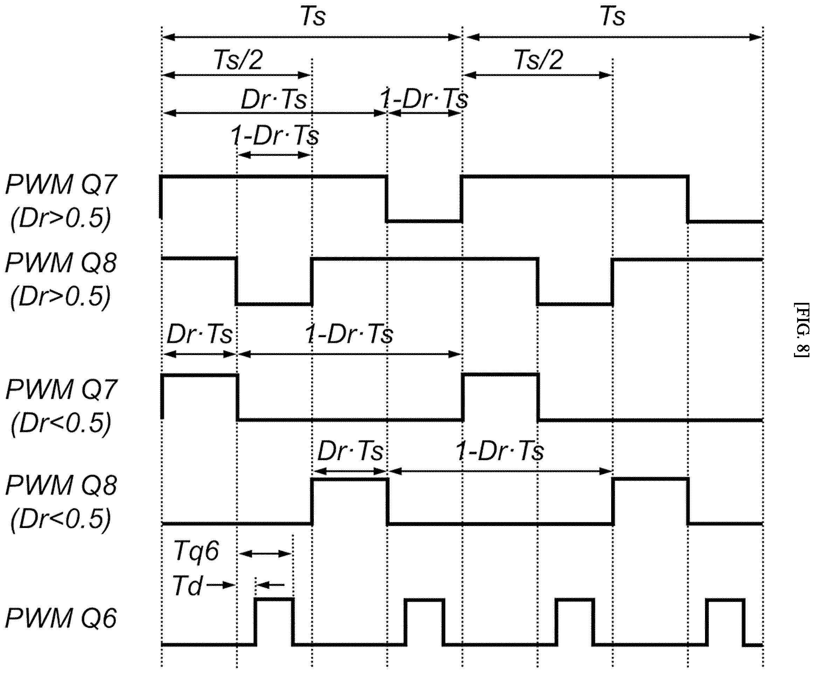

FIG. 8 is a timing diagram of the secondary circuit according to the first embodiment of the present disclosure.

The controller 140 may control the seventh and eighth switches Q7 and Q8 based on a predetermined duty ratio Dr. Referring to FIG. 8, in the first embodiment, pulse width modulation (PWM) waveforms applied to the seventh and eighth switches Q7 and Q8 and the PWM waveforms applied to the sixth switch Q6 are shown when Dr is greater than 0.5 and when Dr is less than 0.5, respectively.

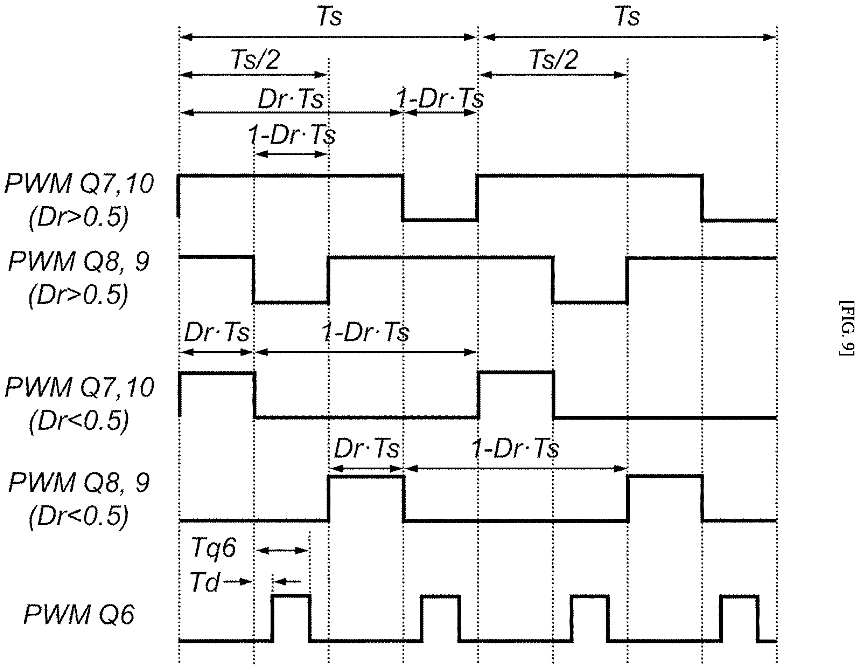

FIG. 9 is a timing diagram of the secondary circuit according to the second embodiment of the present disclosure.

The controller 140 may control the seventh, eighth, ninth and tenth switches Q7 to Q10 based on the predetermined duty ratio Dr. Referring to FIG. 9, in the second embodiment, the PWM waveforms applied to the seventh, eighth, ninth and tenth switches Q7 to Q10 and the PWM waveform applied to the sixth switch Q6 are shown when Dr is greater than 0.5 and when Dr is less than 0.5, respectively.

Here, the predetermined duty ratio Dr may have a value greater than or equal to 0 and less than or equal to 1.

The controller 140 may calculate a turn-on period of the sixth switch Q6 based on a turn-on period Ts of the switch included in the rectifier circuit 131. In detail, referring to FIGS. 8 and 9, the controller 140 may calculate half of the turn-on period Ts of the switch included in the rectifier circuit 131 as the turn-on period of the sixth switch Q6.

In addition, the controller 140 may control the sixth switch Q6 so that the sixth switch Q6 is turned on after any one of the switches included in the rectifier circuit 131 is turned off and a predetermined dead time Td elapses.

In the first embodiment, referring to FIG. 8, the controller 140 may control the sixth switch Q6 so that the sixth switch Q6 is turned on after the predetermined dead time Td elapses after the seventh switch Q7 is turned off, and may control the sixth switch Q6 so that the sixth switch Q6 is turned on after the predetermined dead time Td elapses after the eighth switch Q8 is turned off.

In addition, in the second embodiment, referring to FIG. 9, the controller 140 may control the sixth switch Q6 so that the sixth switch Q6 is turned on after the predetermined dead time Td elapses after the seventh and tenth switches Q7 and 10 are turned off, and may control the sixth switch Q6 so that the sixth switch Q6 is turned on after the predetermined dead time Td elapses after the eighth and ninth switches Q8 and Q9 are turned off.

Therefore, the sixth switch Q6 may be prevented from being turned on before the switch included in the rectifier circuit 131 is turned off, thereby stably controlling the cross-switching of the switches during the dead time Td in the reverse mode.

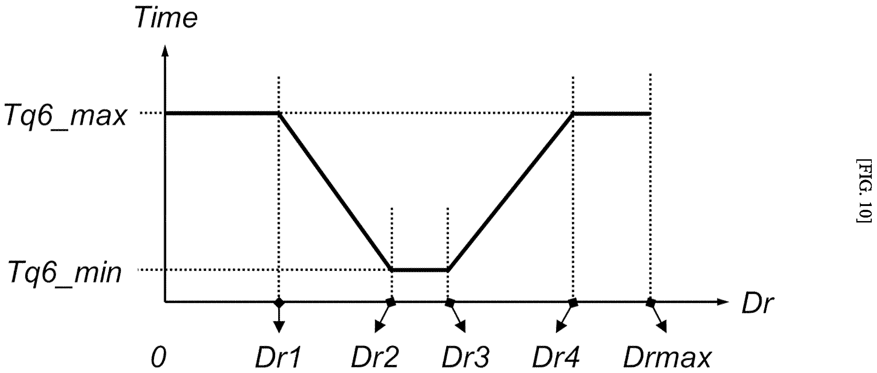

FIG. 10 is a graph of the sum of the dead time Td of the sixth switch Q6 and a turn-on time of the sixth switch Q6 based on on-duty of the switch included in the rectifier circuit 131 according to the present disclosure.

The controller 140 may control the sixth switch Q6 by calculating the turn-on time of the sixth switch Q6 based on the duty ratio of one of the switches included in the rectifier circuit 131. In detail, the controller 140 may calculate Tq6 based on Dr when the duty ratio of one of the switches included in the rectifier circuit 131 is Dr, and the sum of the dead time Td of the sixth switch Q6 and the turn-on time of the sixth switch Q6 is Tq6. In detail, the controller 140 may calculate Tq6 based on a period of Dr.

In detail, the controller 140 may set Tq6 to the maximum value of Tq6, which is a predetermined value, when Dr is greater than or equal to 0 and less than Dr1. In addition, the controller 140 may set Tq6 to a predetermined inclination value and a decreasing value as Dr is increased when Dr is greater than or equal to Dr1 and less than Dr2. In addition, the controller 140 may set Tq6 to the minimum value of Tq6, which is a predetermined value, when Dr is greater than or equal to Dr2 and less than Dr3. In addition, the controller 140 may set Tq6 to a predetermined inclination value and an increasing value as Dr is increased when Dr is greater than or equal to Dr3 and less than Dr4. In addition, the controller 140 may set Tq6 to the maximum value of Tq6 when Dr is greater than or equal to Dr4 and less than or equal to Drmax, which is the maximum value of Dr. Here, Dr1 may be greater than 0, Dr2 may be greater than Dr2, Dr3 may be greater than Dr2, Dr4 may be greater than Dr3, and Drmax may have a value greater than Dr4. That is, as described above, the controller 140 may control the turn-on time of the sixth switch Q6 based on the duty ratio of one of the switches included in the rectifier circuit 131.

As described above, the method of the controller 140 for controlling the sixth switch Q6 by calculating the on-duty of the sixth switch Q6 based on the on-duty of one of the switches included in the rectifier circuit 131 may be applied to the first and second embodiments, respectively.

In this way, the voltage across the seventh and eighth switches Q7 and Q8 included in the rectifier circuit 131 may be lowered, thus enabling the adoption of a switch having a lower withstand voltage for the rectifier circuit 131 compared to the conventional one, reducing the size of the rectifier circuit 131 to thus make the rectifier circuit 131 smaller and lighter, and reducing the manufacturing cost of the rectifier circuit 131.

### [Effect of DC-DC converter 1 according to present disclosure]

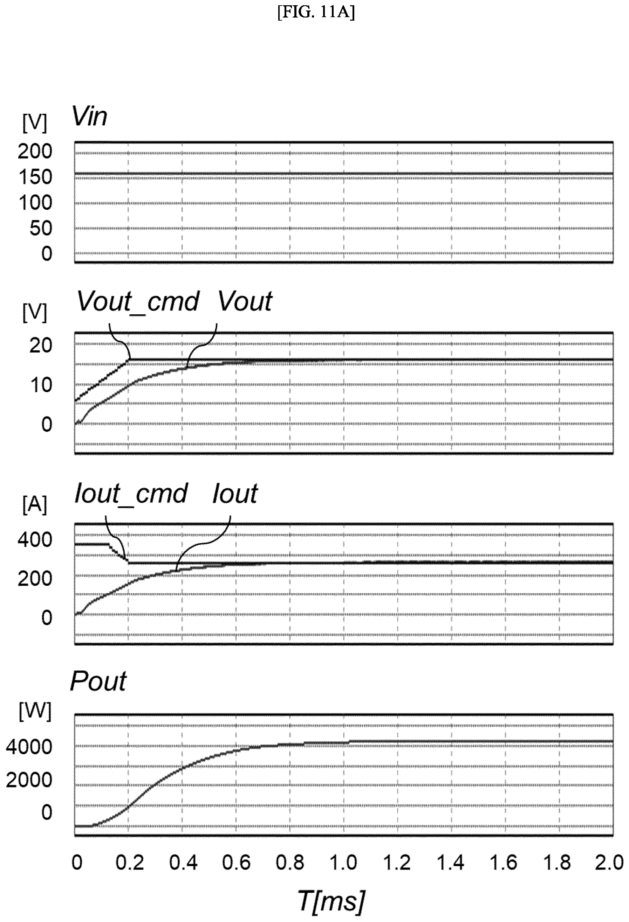

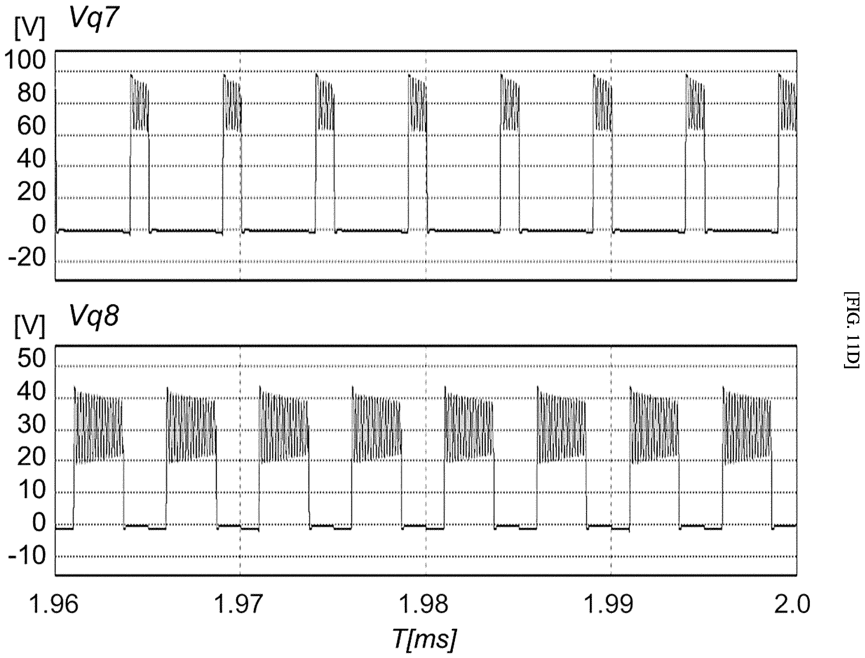

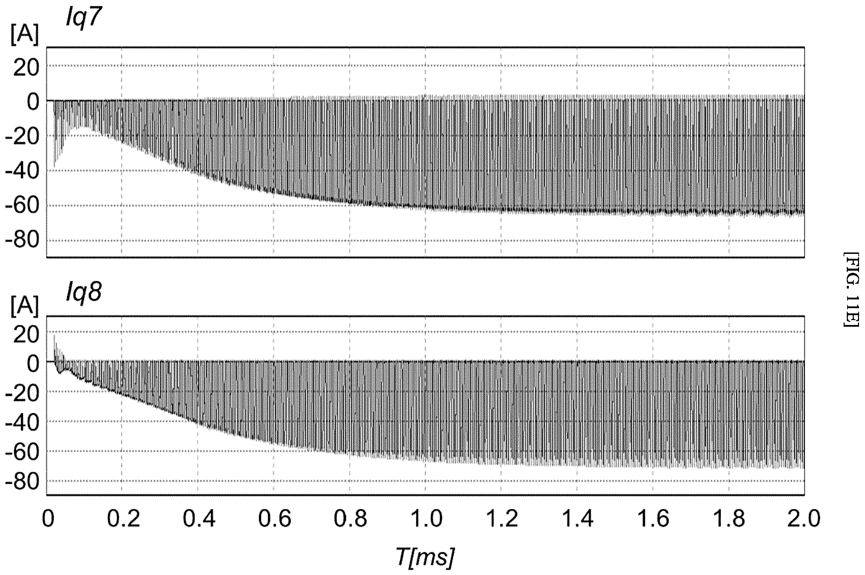

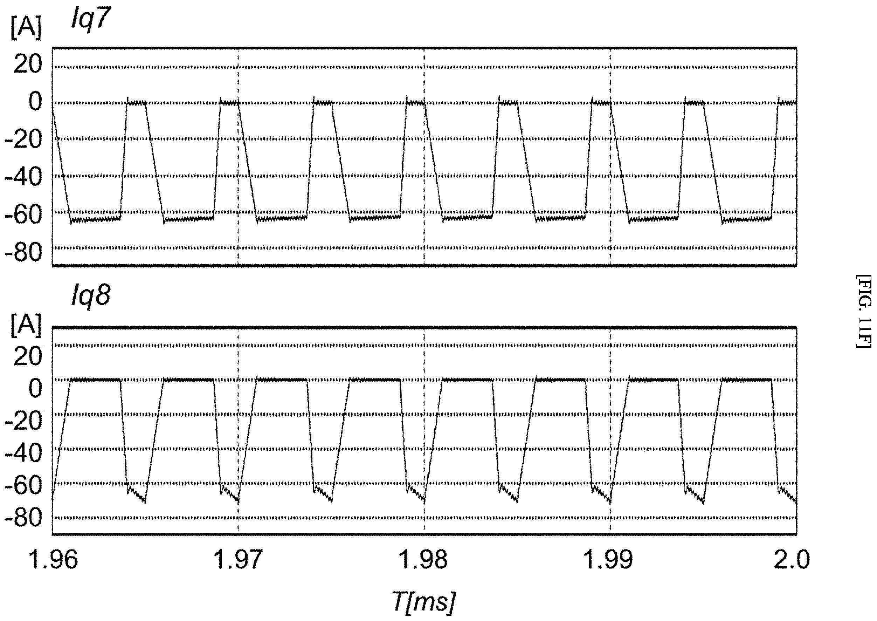

FIGS. 11A to 11F show voltage and current graphs of the DC-DC converter according to the first embodiment of the present disclosure when the DC-DC converter is operated in the forward mode and an input voltage is 160 V.

In detail, FIGS. 11A to 11F show the voltage and current graphs of each switch when the DC-DC converter 1 according to the first embodiment of the present disclosure is operated in the forward mode and an input voltage Vin input into the first terminal T1 is 160 V.

Referring to FIG. 11A, an output voltage command value Vout_cmd and an output current command value Iout_cmd may be set to be lower than the input voltage Vin. Accordingly, an output voltage Vout and an output current Iout may be controlled to the same value as the command value within 0.6 ms.

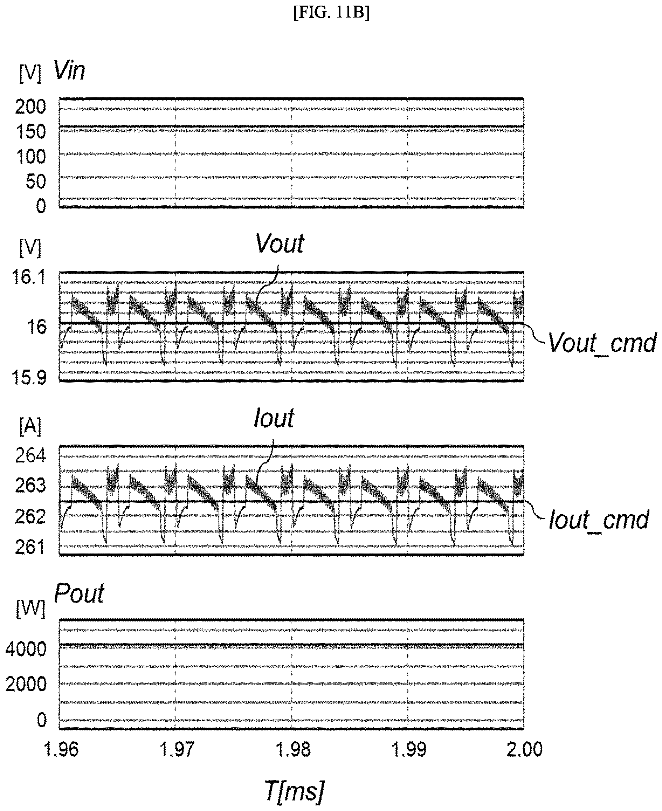

In addition, referring to FIG. 11B, after 1.96 ms, the output voltage Vout may be maintained within ±0.1 V of the output voltage command value Vout_cmd, and the output current Iout may be controlled within ±1.5 A of the output current command value Iout_cmd. Here, it may be seen that an output power Pout is stably maintained at approximately 4.2 kW.

That is, it may be seen that the DC-DC converter 1 may stably output the voltage and the current within a very low error range based on the output voltage Vout and the output current command value Iout_cmd.

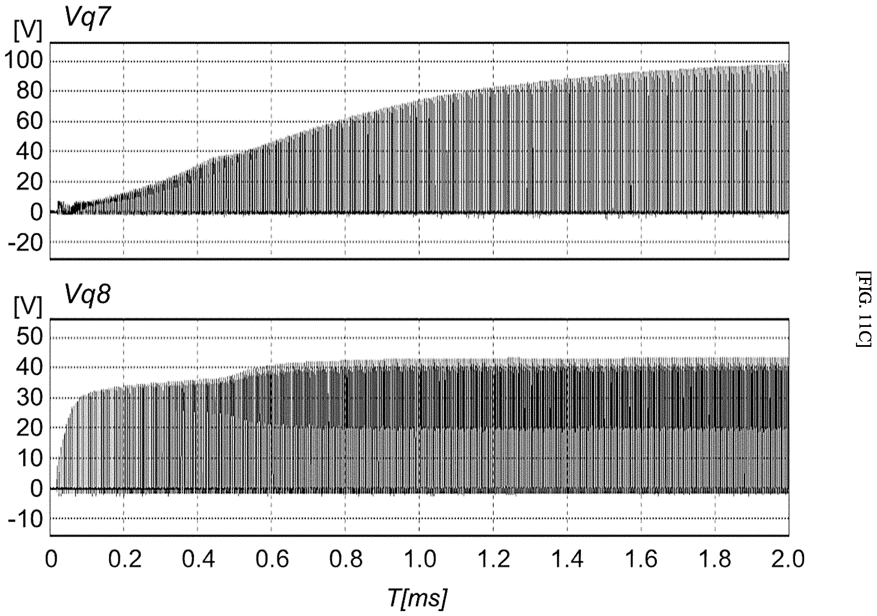

In addition, referring to FIG. 11C to 11F, a voltage Vq7 across the seventh switch may be approximately 100 V, a voltage Vq8 across the eighth switch may be approximately 43 V, a current Iq7 flowing through the seventh switch may be approximately 60 A, and a current Iq8 flowing through the eighth switch may be approximately 70 A. In this way, the input voltage and current may be distributed to the seventh and eighth switches, thereby reducing the withstand voltage of the switches included in the rectifier circuit compared to the conventional one.

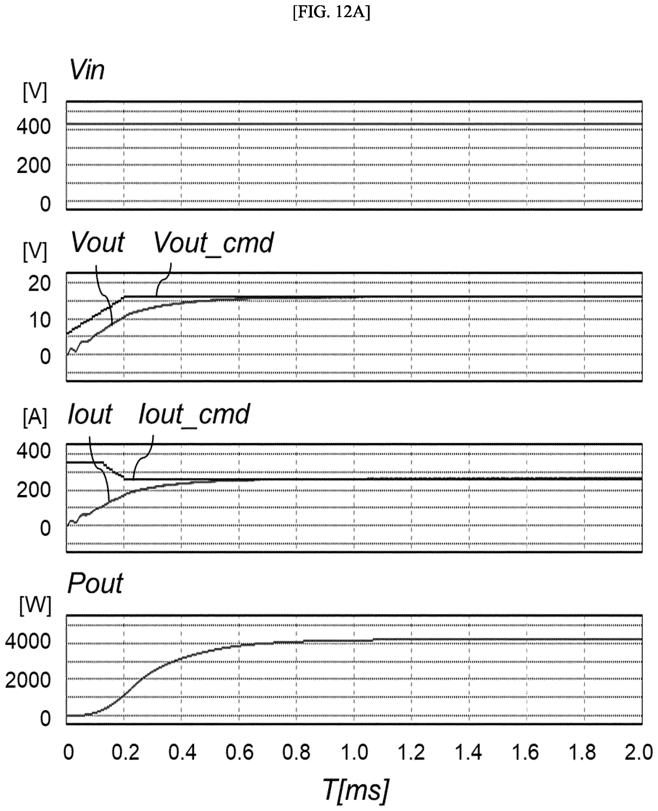

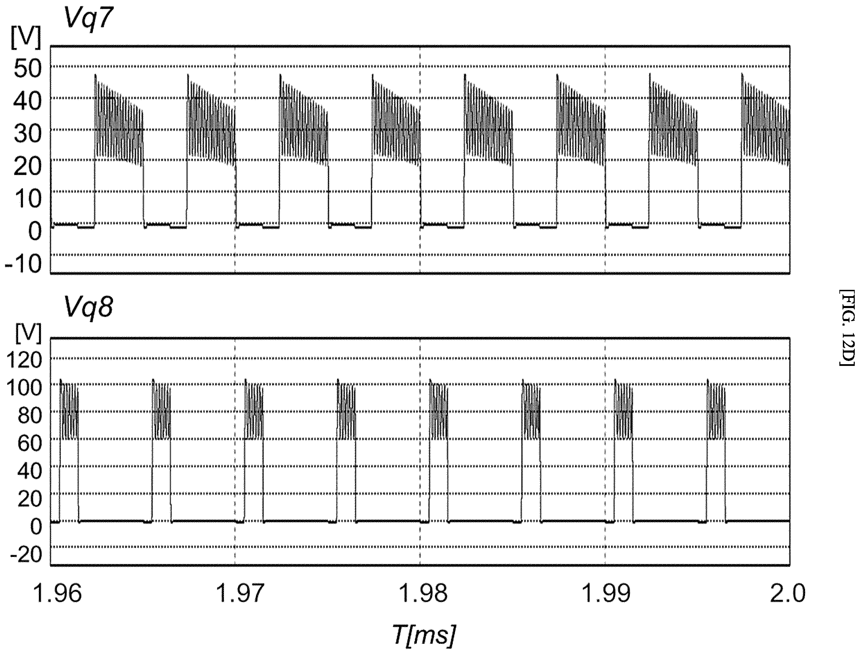

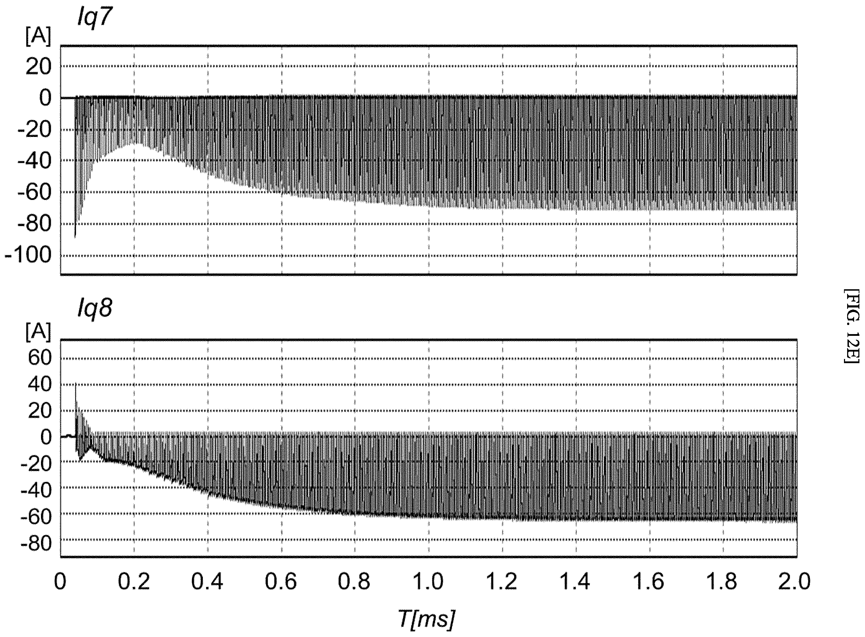

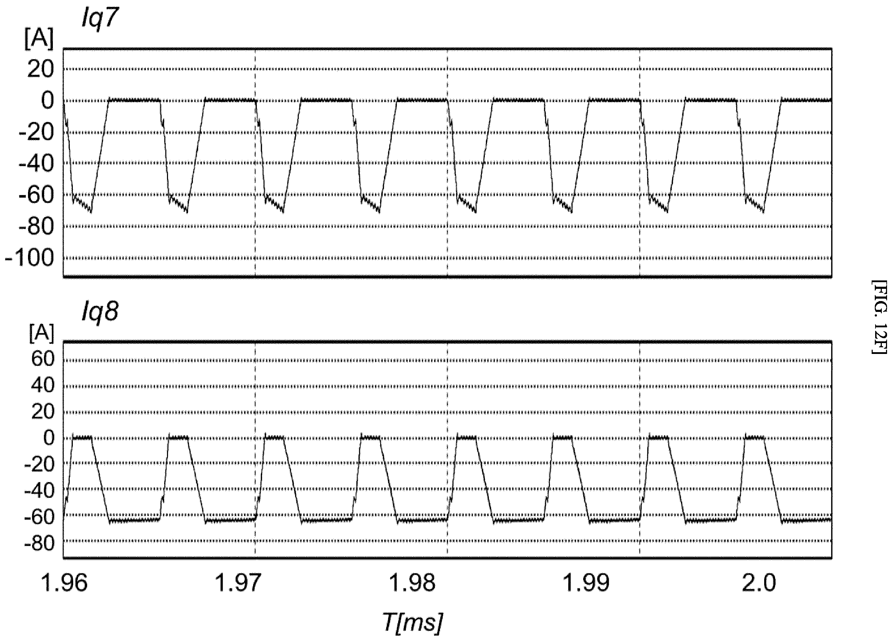

FIGS. 12A to 12F show voltage and current graphs of the DC-DC converter according to the first embodiment of the present disclosure when the DC-DC converter is operated in the forward mode and the input voltage is 430 V.

In detail, FIGS. 12A to 12F show the voltage and current graphs of each switch when the DC-DC converter 1 according to the first embodiment of the present disclosure is operated in the forward mode and the input voltage Vin input into the first terminal T1 is 430 V.

Referring to FIG. 12A, the output voltage command value Vout_cmd and the output current command value Iout_cmd may be set to be lower than the input voltage Vin. Accordingly, even if the input voltage Vin is 430 V, which is higher than 160 V, the output voltage Vout and the output current Iout may be controlled to the same value as the command value within 0.6 ms.

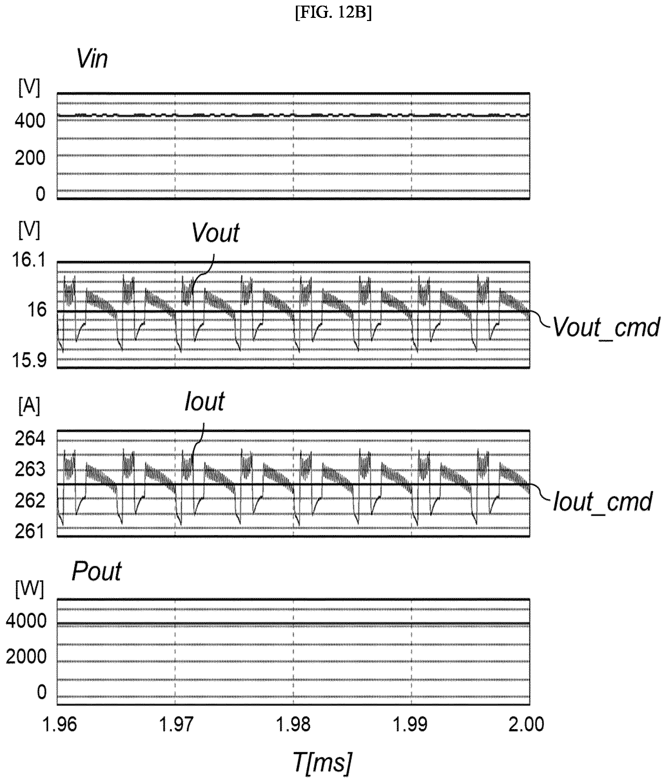

In addition, referring to FIG. 12B, after 1.96 ms, the output voltage Vout may be maintained within ±0.1 V of the output voltage command value Vout_cmd, as in the case where the input voltage Vin is 160 V, and the output current Iout may be controlled within ±1.5 A of the output current command value Iout_cmd.

Here, it may be seen that the output power Pout is stably maintained at approximately 4.2 kW.

That is, it may be seen that the DC-DC converter 1 may stably output the voltage and the current within the very low error range based on the output voltage Vout and the output current command value Iout_cmd.

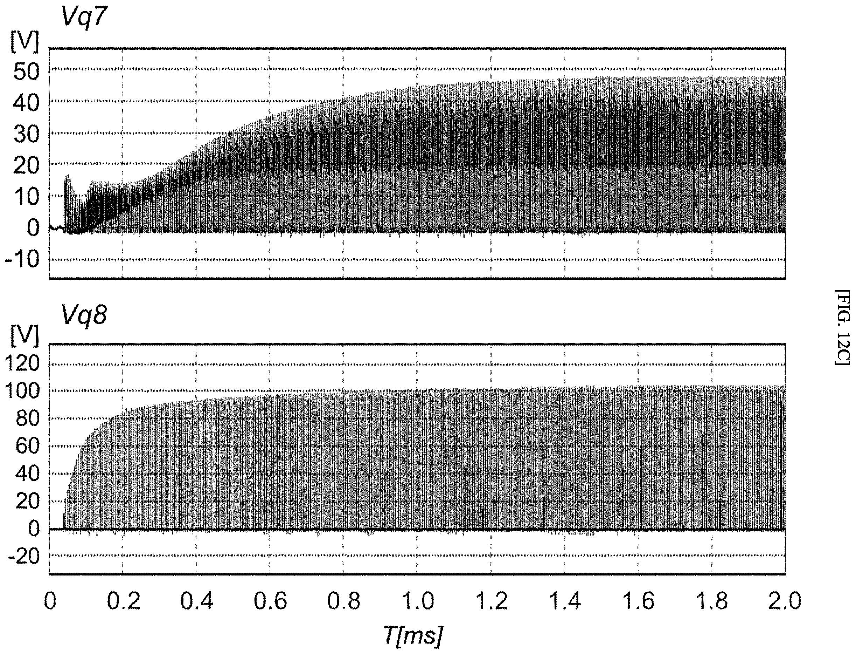

In addition, referring to FIG. 12C to 12F, the voltage Vq7 across the seventh switch may be approximately 48 V, the voltage Vq8 across the eighth switch may be approximately 105 V, the current Iq7 flowing through the seventh switch may be approximately 70A, and the current Iq8 flowing through the eighth switch may be approximately 65 A. In this way, the input voltage and current may be distributed to the seventh and eighth switches, thereby reducing the withstand voltage of the switches included in the rectifier circuit compared to the conventional one.

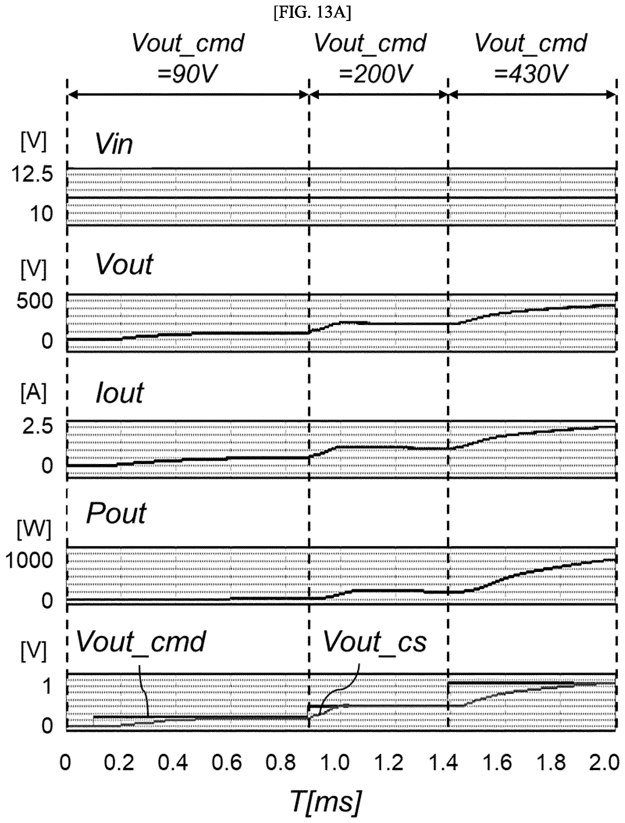

FIGS. 13A to 13F show voltage and current graphs of the DC-DC converter according to the first embodiment of the present disclosure when the DC-DC converter is operated in the reverse mode.

In detail, FIGS. 13A to 13F show the voltage and current graphs of each switch when the DC-DC converter 1 according to the first embodiment of the present disclosure is operated in the reverse mode and the input voltage Vin input the second terminal T2 is 11 V.

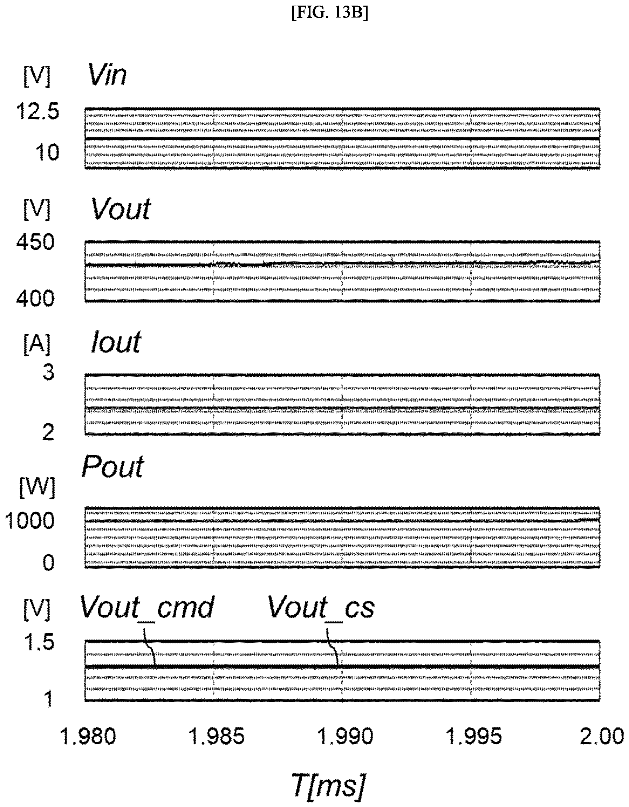

Referring to FIGS. 13A and 13B, the output voltage command value Vout_cmd applied to the controller 140 may be increased stepwise to 90 V, 200 V, and 430 V, respectively, to achieve a final output voltage Vout of 430 V. As an example, the output voltage command value Vout_cmd may be set to 90 V for a period of 0 to 0.9 seconds (s), 200 V for a period of 0.9 to 1.4 s, and 430 V for a period of 1.4 to 2.0 s, respectively. In addition, in this case, an actual output voltage command value may be represented by Vout_cs. As the output voltage command value Vout_cmd is increased, the output voltage Vout, the output current Iout, and the output power Pout may be increased, thus achieving the final output voltage Vout of 430 V within 2.0 millisecond (ms).

In addition, as the output voltage command value Vout_cmd is increased stepwise, the output voltage Vout, the output current Iout, and the output power Pout may also be increased together, and at a time point of 2.0 s, the output voltage Vout may stably output 430 V, and the output power Pout may be output at a level of 1 kW.

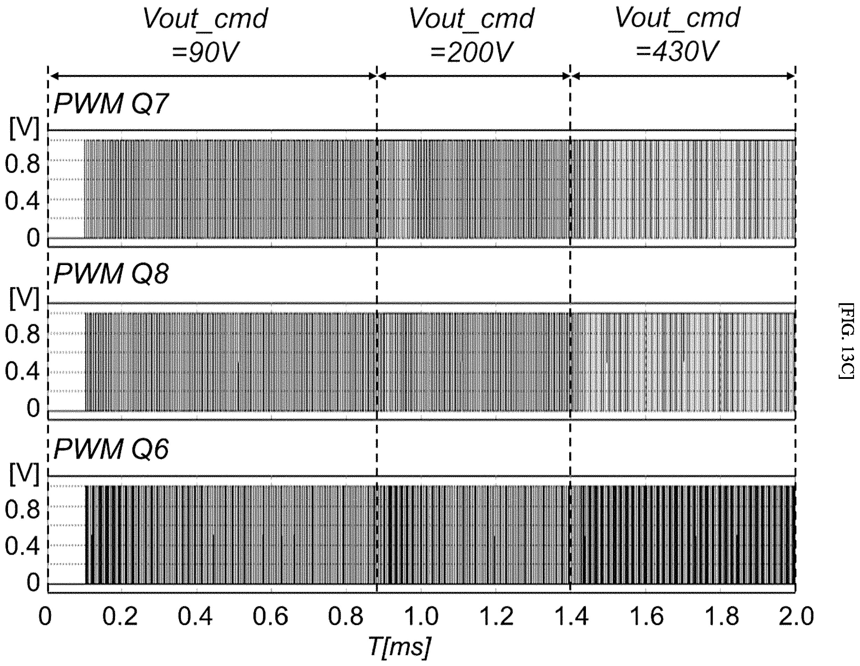

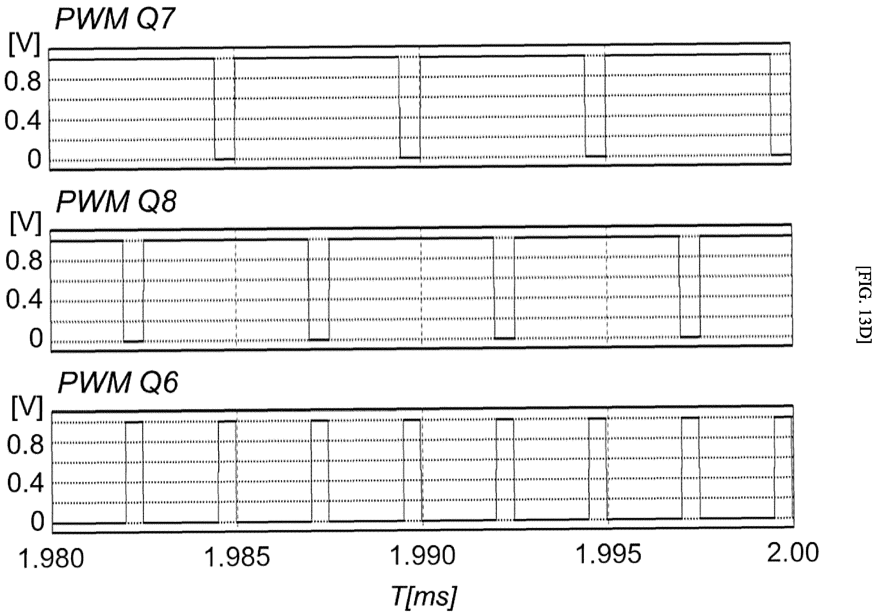

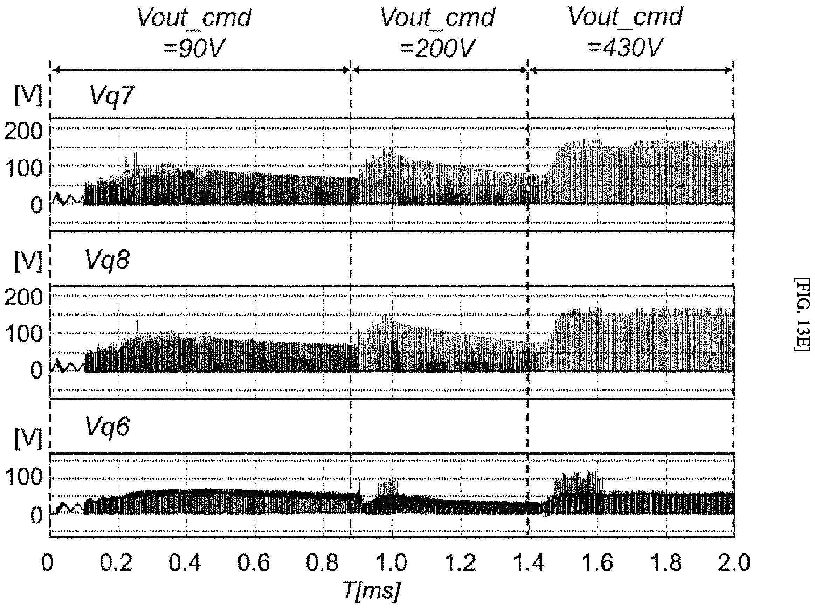

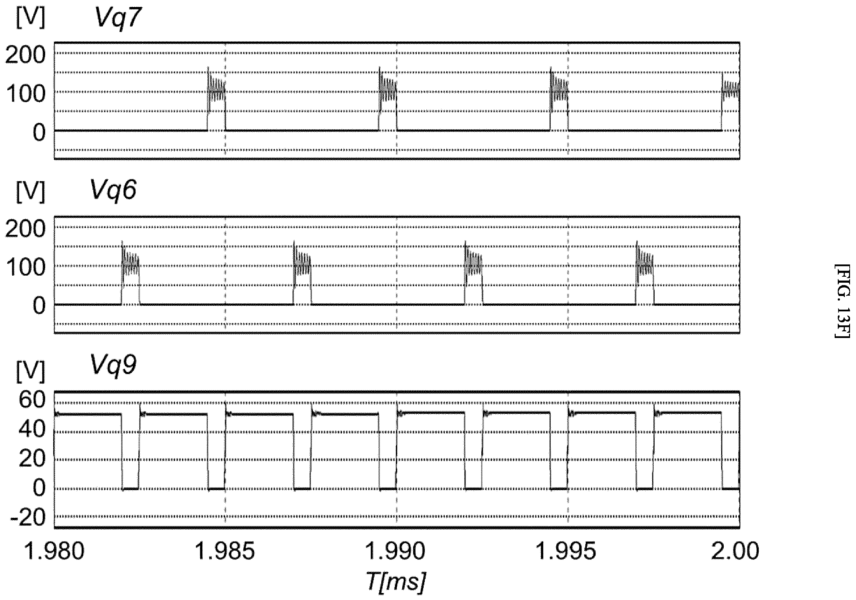

Referring to FIGS. 13C and 13D, the sixth to eighth switches may be PWM-controlled to reduce the switch withstand voltage in the reverse mode. In this case, referring to FIGS. 13E and 13F, in the reverse mode, when the input voltage Vin is 11 V and the output voltage Vout is 430 V, the voltages Vq7 and Vq8 across the seventh and eighth switches may be maintained to be equal to or less than 160 V, and it may thus be seen that the voltage across the switch included in the rectifier circuit 131 is reduced.

As set forth above, in the forward mode for converting power from the high voltage to the low voltage, the DC-DC converter 1 according to the present disclosure as described above may have the wider input voltage range compared to the conventional DC-DC converter 1, provide the stable rated output, and thus receive various input voltages to convert power.

In addition, in the reverse mode for converting power from the low voltage to the high voltage, the DC-DC converter may be operated as the current-type converter, to which the inductor is applied, and the maximum voltage that is capable of being boosted may be greatly improved compared to the conventional DC-DC converter, thus increasing the power conversion performance of the DC-DC converter.

In addition, the high performance and efficiency may be achieved using only one DC-DC converter, and, simultaneously, the bidirectional mode and the forward mode switching are possible using the mode switching circuit 123 in the primary circuit 120 without disposing the buck-boost converter separately in the secondary circuit. In this way, the configuration of the DC-DC converter may be simplified, its volume may be reduced, and the complexity of control may be reduced.

## Claims

1. A direct current to direct current (DC-DC) converter (1) comprising:
a transformer (110) disposed between a first terminal (T1) and a second terminal (T2);
a primary circuit (120) disposed between the first terminal (T1) and the transformer (110); and
a secondary circuit (130) including a rectifier circuit (131) and disposed between the transformer (110) and the second terminal (T2),
wherein the primary circuit (120) includes:
a totem pole circuit (121) disposed between a first end of a primary winding of the transformer (110) and the first terminal (T1),
a primary clamp circuit (122) disposed between a second end of the primary winding of the transformer (110) and a negative terminal of the first terminal (T1), and
a mode switching circuit (123) including at least one switch, disposed between the second end of the primary winding of the transformer (110) and a positive terminal of the first terminal (T1), and performing switching between a forward mode and a reverse mode.

2. The DC-DC converter (1) of claim 1,
wherein the totem pole circuit (121) includes a first switch (Q1) and a second switch (Q2) connected to the positive terminal and the negative terminal of the first terminal (T1), respectively,
wherein a common node between the first switch (Q1) and the second switch (Q2) is connected to the first end of the primary winding of the transformer (110).

3. The DC-DC converter (1) of claim 2,
wherein the primary clamp circuit (122) includes:
a third switch (Q3) and a first clamp capacitor (C1) connected in series with each other between the second end of the primary winding of the transformer (110) and the negative terminal of the first terminal (T1), and
a fourth switch (Q4) connected in parallel with the third switch (Q3) and the first clamp capacitor (C1).

4. The DC-DC converter (1) of claim 3,
wherein a first end of the fourth switch (Q4) is connected to the negative terminal of the first terminal (T1) and a second end of the fourth switch (Q4) is connected to the second end of the primary winding, and
wherein a first end of the third switch (Q3) is connected to the second end of the primary winding and a second end of the third switch (Q3) is connected to the first clamp capacitor (C1).

5. The DC-DC converter (1) of claim 4,
wherein the at least one switch of the mode switching circuit (123) includes a fifth switch (Q5),
wherein the mode switching circuit (123) further includes a diode (D1) connected in series with the fifth switch (Q5) between the second end of the primary winding of the transformer (110) and the positive terminal of the first terminal (T1), and
wherein the diode (D1) is disposed to allow a current direction from the second end of the primary winding of the transformer (110) to the positive terminal of the first terminal (T1) to be a forward direction of the diode (D1).

6. The DC-DC converter (1) of claim 5, further comprising:
a controller (140) for controlling the primary circuit (120) or the secondary circuit (130),
wherein the controller (140) controls:
the fifth switch (Q5) to be turned off in the forward mode for transferring power from the first terminal (T1) to the second terminal (T2), and
the fifth switch (Q5) to be turned on in the reverse mode for transferring power from the second terminal (T2) to the first terminal (T1).

7. The DC-DC converter (1) of claim 6, wherein in the forward mode, the controller (140) controls:
the first and fourth switches (Q1, Q4) to be turned on or off simultaneously,
the second and third switches (Q2, Q3) to be turned on or off simultaneously, and
the first and fourth switches (Q1, Q4) and the second and third switches (Q2, Q3) to be turned on complementarily.

8. The DC-DC converter (1) of claim 6, or 7, wherein in the reverse mode, the controller (140) controls:
the first and fourth switches (Q1, Q4) to be turned on or off simultaneously,
the third switch (Q3) to be turned off, and
the second switch (Q2) to be turned on complementarily with the first and fourth switches (Q1, Q4).

9. The DC-DC converter (1) of any one of claims 1 to 8,
wherein the rectifier circuit (131) includes:
a seventh switch (Q7) connected between a first end of a secondary winding of the transformer (110) and a negative terminal of the second terminal (T2), and
an eighth switch (Q8) connected between a second end of the secondary winding of the transformer (110) and the negative terminal of the second terminal (T2), and
wherein a tab terminal (111) disposed in the secondary winding of the transformer (110) is connected to a positive terminal of the second terminal (T2).

10. The DC-DC converter (1) of claim 9,
wherein the secondary circuit (130) further includes a secondary clamp circuit (132) including a second clamp capacitor (C2) and a sixth switch (Q6) connected in series with each other, and
wherein the secondary clamp circuit (132) is connected between the tab terminal (111) of the transformer (110) and the negative terminal of the second terminal (T2).

11. The DC-DC converter (1) of claim 10,
wherein the secondary circuit (130) further includes an inductor (L1) and a low-voltage capacitor (Clv), and
wherein the inductor (L1) and the low-voltage capacitor (Clv) are disposed between the secondary clamp circuit (132) and the second terminal (T2), and the inductor (L1) includes a first end connected to the secondary clamp circuit (132) and a second end connected to the positive terminal of the second terminal (T2).

12. The DC-DC converter (1) of claim 11,
wherein the first end of the inductor (L1) is connected to the tab terminal (111) to which the second clamp capacitor (C2) is connected, and
wherein the low-voltage capacitor (Clv) is connected between the positive terminal and the negative terminal of the second terminal (T2).

13. The DC-DC converter (1) of any one of claims 1 to 12,
wherein the rectifier circuit (131) includes seventh, eighth, ninth and tenth switches (Q7, Q8, Q9, Q 10) connected to each other in a full bridge,
wherein an input terminal of the rectifier circuit (131) is connected to a secondary winding of the transformer (110), and
wherein an output terminal of the rectifier circuit (131) is connected to the second terminal (T2).

14. The DC-DC converter (1) of claim 13,
wherein the secondary circuit (130) further includes a secondary clamp circuit (132) including a second clamp capacitor (C2) and a sixth switch (Q6) connected in series with each other, and
wherein the secondary clamp circuit (132) is disposed between the output terminal of the rectifier circuit (131) and the second terminal (T2).

15. The DC-DC converter (1) of claim 14,
wherein the secondary circuit (130) further includes an inductor (L1) and a low-voltage capacitor (Clv), and
wherein the inductor (L1) and the low-voltage capacitor (Clv) are disposed between the secondary clamp circuit (132) and the second terminal (T2), and the inductor (L1) includes a first end connected to the secondary clamp circuit (132) and a second end connected to the positive terminal of the second terminal (T2).

16. The DC-DC converter (1) of claim 15,
wherein the first end of the inductor (L1) is connected to a common node of the seventh switch (Q7) and the ninth switch (Q9), and
wherein the low-voltage capacitor (Clv) is connected between the positive terminal and the negative terminal of the second terminal (T2).
